# EUROPÄISCHE PATENTSCHRIFT

(11) **EP 1 468 860 B1**
(45) Veröffentlichungstag und Bekanntmachung des Hinweises auf die Patenterteilung: **26.09.2007**
(21) Anmeldenummer: 04008529.2
(22) Anmeldetag: 08.04.2004
(51) Int. Cl.: B60K 23/04, B60K 23/08, B60K 17/346

(54) **Verfahren und Vorrichtung zur Steuerung von Schaltelementen zur Zuschaltung von Antriebsachsen und Sperren von Differentialen**
Control method and apparatus for shifting means for axle coupling and differential locking
Procédé et mécanisme de commande pour moyens d'accouplement d'axes de transmission et pour moyens de blocage de différentiel

(30) Priorität: 16.04.2003 DE 10317450
(43) Veröffentlichungstag der Anmeldung: 20.10.2004
(73) Patentinhaber: ZF FRIEDRICHSHAFEN AG, 88038 Friedrichshafen (DE)
(72) Erfinder: Frühwirth, Gerhard, 4274 Schönau (AT)

(56) Entgegenhaltungen:
- WO-A-02/20319
- DE-A1- 4 427 040
- DE-A1- 19 749 919
- US-A1- 2002 153 770

## Beschreibung

Die vorliegende Erfindung betrifft ein Verfahren zur selbsttätigen Steuerung von Schaltelementen zur Zuschaltung von Antriebsachsen und Sperren von Differentialen gemäß dem Oberbegriff des Patentanspruchs 1. Des weiteren betrifft die vorliegende Erfindung eine Vorrichtung zur Steuerung von Schaltelementen zur Zuschaltung von Antriebsachsen und Sperren von Differentialen, insbesondere eine Vorrichtung zur Durchführung des erfindungsgemäßen Verfahrens.

Die gattungsbildende DE 197 49 919 A1 offenbart ein Verfahren zum selbsttätigen Sperren von Differentialen eines allradgetriebenen Fahrzeugs, wobei Schlupfsignale gebildet werden, die sobald sie einen Schwellenwert übersteigen, die Ansteuerung der jeweiligen Differentiale einleiten. Um den Einfluss des Lenkrollradius zu berücksichtigen, wird die Änderung des Lenkwertes mit ermittelt und daraus ein Scheinschlupf ermittelt. Aus dem jeweiligen Scheinschlupf werden korrigierte Schwellenwerte bestimmt und die Schlupfsignale mit den korrigierten Schwellenwerten verglichen und hieraus eine Ansteuerung des jeweiligen Differentials eingeleitet.

Vorrichtungen zur Steuerung von Schaltelementen im Antriebsstrang eines Kraftfahrzeugs sind aus dem Stand der Technik bekannt. Beispielsweise beschreibt die DE 4327507 C2 eine Vorrichtung zur selbsttätigen Steuerung der Kupplungen zur Betätigung wenigstens einer Achsquersperre sowie einer Längssperre oder der Zuschaltung des Vorderradantriebs im Antriebsstrang eines allradangetriebenen Fahrzeugt, wobei ausgehend von den Raddrehzahlsignalen Schlupfsignale gebildet, mit Schwellenwerten verglichen und so Steuersignale für die Kupplungen erzeugt werden.

Hierbei ist für jede einzelne Kupplung jeweils ein eigenes Steuermodul vorgesehen, welches Steuersignale für diese Kupplung erzeugt, wobei die Steuermodule der Kupplungen für die wenigstens eine Achssperre auch Steuersignale für die Kupplung zur Betätigung der Längssperre oder zur Zuschaltung des Vorderradantriebs abgeben, bevor sie die eigene Kupplung ansteuern. Des weiteren ist vorgesehen, dass die Schlupfsignale Schlupfsummensignale sind, welche getrennt durch Integration der der wenigstens einen Achssperre, der Längssperre oder der Zuschaltung des Vorderradantriebs zugeordneten Raddrehzahldifferenzen gebildet und mit gestuften Schlupfsummenschwellenwerten verglichen werden, durch die die Reihenfolge und die Reaktionszeit der Sperrung der Sperren oder der Zuschaltung des Vorderradantriebs gesteuert wird.

Durch die Vorgehensweise gemäß DE 4327507 C2 wird sicherstellt, dass nicht immer die Sperre am schnellsten aktiviert wird, die den größten Schlupf aufweist, sondern dass diejenige Sperre vorher modulübergreifend von dem Modul, der den Sperrwunsch äußert, aktiviert wird, die in diesem Fall die größte Wirkung mit den wenigsten Nachteilen bringt. Wenn die erwartete Wirkung zu klein ist, dann wird die gewünschte moduleigene Sperre aktiviert. Des weiteren können mit diesem Verfahren nicht quantifizierbareElastizitäten und Fahrbahnunebenheiten ausgefiltert werden. Nachteilig ist jedoch, dass viele Vergleiche und Berechnungen erforderlich sind, um die Sperrwünsche herauszufiltern. Zudem ist die Reihenfolge der Sperrvorgänge fest vorgegeben und während des Betriebs nicht beeinflussbar.

Im Rahmen der DE 3505455 A1 wird eine Vorrichtung zum automatischen Zu- oder Abschalten von Antriebselementen eines Kraftfahrzeuges beschrieben, insbesondere zum automatischen Zu- oder Abschalten des Antriebes wenigstens einer Achse und/oder von Sperren für Verteiler- bzw. Ausgleichsgetriebe, mit Sensoren für die Raddrehzahlen und für den Lenkwinkel des Fahrzeuges und mit einer Elektronikeinheit, welche abhängig von der Fahrzeuggeschwindigkeit, der Fahrzeugbeschleunigung dem Radschlupf und vom Bewegungsverhalten des Fahrzeugs als Funktion des Lenkwinkels die Antriebskomponenten einzeln, gleichzeitig oder in einer bestimmten Reihenfolge schaltet. Ferner weist die Vorrichtung zum automatischen Zu- oder Abschalten von Antriebselementen eine adaptiv arbeitende Anpassungselektronik für die Drehzahlen der Räder und für den Lenkwinkel des Fahrzeugs auf. Demnach wird eine Sperrreihenfolge eingehalten, wobei nur aufgrund von Schlupf an der Vorderachse bzw. Schlupf zwischen Hinterachse und Vorderachse geschaltet wird. Fahrbahnunebenheiten können nicht direkt ausgefiltert werden; dies ist nur indirekt durch Vorgabe entsprechend hoher Schlupfgrenzen und niedriger Geschwindigkeitsgrenzwerte möglich.

Der vorliegenden Erfindung liegt die Aufgabe zugrunde, ausgehend von dem eingangs genannten Stand der Technik, ein Verfahren zur selbsttätigen Steuerung von Schaltelementen zur Zuschaltung von Antriebsachsen und Sperren von Differentialen anzugeben, welches die Nachteile des Standes der Technik vermeidet. Ein weiteres Ziel der Erfindung ist es, eine Vorrichtung zur selbsttätigen Steuerung von Schaltelementen zur Zuschaltung von Antriebsachsen und Sperren von Differentialen, insbesondere zur Durchführung des erfindungsgemäßen Verfahrens anzugeben.

Insbesondere soll die Sperr/Schaltreihenfolge durch unterschiedliche Vorgabe der Schlupf-Grenzen während des Betriebs änderbar sein. Des weiteren soll eine einfache und schnellere Auswertung der Daten realisiert werden. Ferner soll eine Anwendung auf unterschiedlichste vielachsige Fahrzeuge problemlos möglich sein.

Diese Aufgabe wird für ein Verfahren durch die Merkmale des Patentanspruchs 1 gelöst. Eine erfindungsgemäße Vorrichtung ist Gegenstand des Patentanspruchs 17. Weitere Ausgestaltungen und Vorteile gehen aus den entsprechenden Unteransprüchen hervor.

Das erfindungsgemäße Verfahren gemäß Anspruch 1 umfasst insbesondere folgende Schritte:
Erfassen von Eingangssignalen;
Ermitteln der Fahrzeuggeschwindigkeit aus den Radgeschwindigkeiten;
Ermitteln der Schlupfgrenzgeschwindigkeiten für die verschiedenen Schalt/Sperrelemente;
Berechnen des Schlupfes bzw. der Ist-Schlupfgeschwindigkeit für jedes Schalt/Sperrelement und Beseitigen der systematischen Störeinflüsse;
Vergleichen der Ist-Schlupfgeschwindigkeit mit der Schlupfgrenzgeschwindigkeit für jedes Schalt/Sperrelement;
Auswählen der entscheidenden Schlupfgeschwindigkeiten bzw. der Schlupfgeschwindigkeiten, die für die Auslösung einer Sperre relevant sind;
Herausfiltern des Störeinflusses von Elastizitäten im Antriebsstrang, im Reifen und von Unebenheiten der Fahrbahn auf die entscheidenden Schlupfgeschwindigkeiten und Erzeugen eines Schaltwunsches für eine Sperre, wenn ein Grenzwert erreicht wird; und
Erzeugen eines Ansteuerungssignales für zumindest ein Schalt/Sperrelement nach Berücksichtigung weiterer Faktoren für jedes Schalt/Sperrelement, wobei die Berechnungen für Zugschlupf und Schubschlupf getrennt durchgeführt werden.

Ein besonders vorteilhafte Variante des hier vorgestellten Verfahrens umfasst folgende zusätzliche Schritte:
Auswählen der relevantesten Sperre unter den auszulösenden Sperren und unterstützen der Schaltung dieser Sperre durch generieren einer Abtriebsdrehmoment-Rücknahmeanforderung und Begrenzen der Motordrehzahl in Abhängigkeit von der Schlupfgeschwindigkeit; und
Freigeben der Motordrehzahl und/oder des Motormomentes nach der Schaltung einer Sperre, wobei die Begrenzunggen progressiv aufgehoben werden.

Zudem wird eine Vorrichtung zur selbsttätigen Steuerung von Schaltelementen zur Zuschaltung von Antriebsachsen und Sperren von Differentialen vorgeschlagen, welche gemäß einer bevorzugten Ausführungsform eine Einrichtung zur Signalerfassung und zur Signalaufbereitung, eine Einrichtung zur Ermittlung der Fahrzeuggeschwindigkeit aus den Radgeschwindigkeiten und zur Ermittlung der Vergleichs- bzw. Grenz- und Schlupfgrenzgeschwindigkeiten sowie der Grenzwerte für Lenkeinschlag und Querbeschleunigung, eine Einrichtung zur Schlupfberechriung für jedes Schalt/Sperrelement, eine Einrichtung zum Vergleich der Ist- Schlupfgeschwindigkeit mit den Grenzwerten für die Schlupfgeschwindigkeit für jedes Schalt/Sperrelement, Einrichtungen zur Auswahl der schaltungsauslösenden Schlupfgeschwindigkeiten, Einrichtungen zur Filterung von Elastizitäten im Antriebsstrang und in den Reifen und von Unebenheiten und zur Erzeugung des Sperrwunsches für jedes Schalt/Sperrelement, eine Einrichtung zur Erzeugung des Ansteuerungssignales nach Berücksichtigung weiterer Faktoren für jedes Schalt/Sperrelement, eine Einrichtung zur Auswahl der relevantesten Sperre, eine Einrichtung zur Ansteuerung des Drehmomentes in Abhängigkeit von der Schlupfgeschwindigkeit für die relevanteste Sperre, und eine Einrichtung zur Begrenzung der Motordrehzahl nach erfolgter Sperre umfasst. Die Vorrichtung ist dafür ausgebildet, die Berechnungen für Zugeschlupf und Schubschlupf getrennt durch zuführen.

Bei der Vorrichtung handelt es sich bevorzugterweise um ein Steuergerät; die darin enthaltenen Einrichtungen sind Steuermodule.

Die Erfindung wird im folgenden anhand der beigefügten Figuren am Beispiel eines 4x4 Fahrzeugs näher erläutert.

Es zeigen:
Figur 1: Eine Blockdarstellung der einzelnen Einrichtungen der erfindungsgemäßen Vorrichtung und eine schematische Darstellung der für die Erfindung relevanten Komponenten eines 4x4 Fahrzeugs;
Figur 2: Ein Diagramm, welches beispielhaft den Verlauf einer Schlupfgeschwindigkeit als Funktion der Zeit darstellt;
Figur 3: Ein Diagramm, welches beispielhaft den Verlauf des Schlupfweges als Funktion der Zeit für eine Quersperre darstellt; und
Figur 4: Ein Diagramm, welches beispielhaft den Verlauf des Schlupfweges als Funktion der Zeit für eine Längssperre darstellt;

Gemäß der Erfindung umfasst die Vorrichtung bzw. das Steuergerät zur selbsttätigen Steuerung von Schaltelementen zur Zuschaltung von Antriebsachsen und Sperren von Differentialen eine Einrichtung bzw. Steuermodul 1 zur Erfassung von Eingangssignalen, wie Radgeschwindigkeiten, Lenkwinkel, Istwerte für Motorstaubremse, Retarder (falls vorhanden), Bremspedal, Getriebegang, Verteilergetriebegang, Getriebedrehzahlen, Status der Fahrkupplung bzw. Wandlerüberbrückungskupplung, aktuelles Motormoment, Motordrehzahl, sowie weiterer relevanter Parameter.

Hierbei kann ein Teil dieser Daten über einen Datenbus von Steuergeräten weiterer Systeme des Fahrzeugs stammen; sollten jedoch Daten nicht ohnehin vorliegen, so,werden diese mittels geeigneter Einrichtungen direkt erfasst.

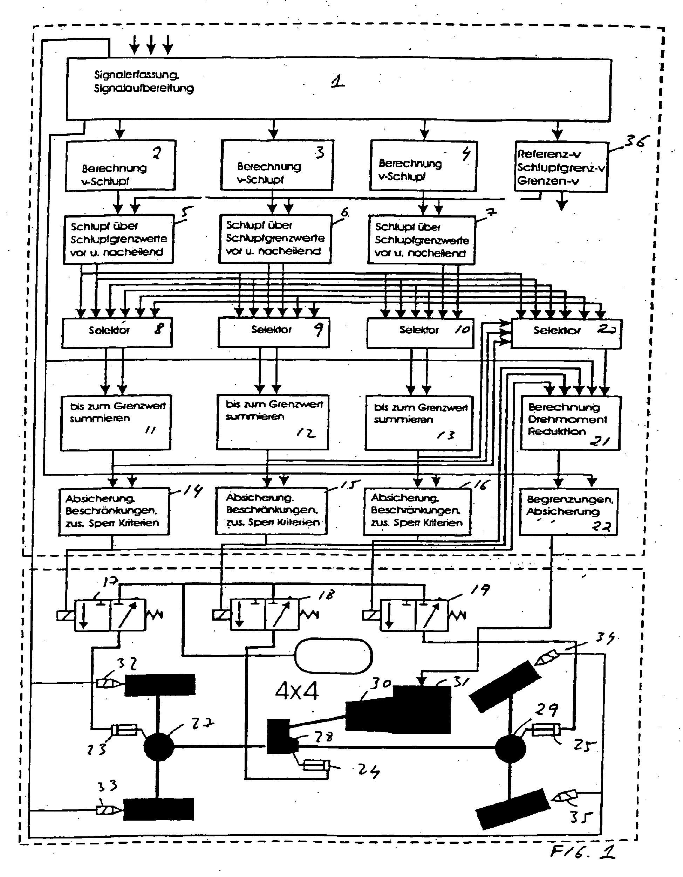

Im unteren Teil der Figur 1 sind die für die Erfindung relevanten Bauteile eines 4x4 Fahrzeugs dargestellt. Gezeigt sind das Vorderachsdifferential 29 mit einem Aktuator 25 für das entsprechende Schaltelement, das Hinterachsdifferential 27 mit einem Aktuator 23 für das entsprechende, eine Sperre auslösende Schaltelement, der Motor 31, das Getriebe 30, das Verteilergetriebe 28 mit dem entsprechenden Aktuator 24, sowie Sensoren 32, 33, 34, 35. Ferner sind die Ventile 17, 18, 19 zur Betätigung der Aktuatoren 23, 24, 25 gezeigt.

Gemäß der Erfindung enthält die Einrichtung 1 Mittel zur selbsttätigen Bildung von Abweichungen oder Korrektursignalen für die jeweiligen Eingangssignale. Beispielsweise können der Offset der Lenkungsmittenstellung oder die Unterschiede der Bereifung ermittelt werden. Die ermittelten Abweichungen werden in den weiteren Berechnungen berücksichtigt. Dadurch werden die Ergebnisse der Berechnungen genauer und es können engere Grenzwerte vorgegeben werden. Ferner kann die Einrichtung 1 Mittel zum Ermitteln des Status der Sperren aus den Radgeschwindigkeiten (wenn es sich nicht um proportional gesteuerte Sperren und Schaltelemente handelt), wenn deren Aktuatoren nicht mehr gesteuert sind. Das errechnete Sperren - Statussignal kann wiederum dazu benutzt werden, ev. vorhandene gemessene Rückmeldesignale des Sperrenzustandes auf Plausibilität zu prüfen.

Wie Figur 1 zu entnehmen, enthält die erfindungsgemäße Vorrichtung eine Einrichtung 36 zur Ermittlung der Fahrzeuggeschwindigkeit aus den Radgeschwindigkeiten. In dieser Einrichtung 36 werden auch sämtliche Vergleichs- bzw. Grenzgeschwindigkeiten ermittelt, welche für die Beschränkung von Funktionen benötigt werden. In der Einrichtung 36 werden die Schlupfgrenzgeschwindigkeiten (also die zulässigen Schlupfgeschwindigkeiten) für die verschiedenen Schaltelemente/Sperren ermittelt, wobei diese Grenzwerte auch Funktionen z.B. der Fahrzeuggeschwindigkeit und des Antriebsmomentes sein können. Aus den zur Verfügung stehenden Signalen ist es auch erfindungsgemäß möglich, Grenzwerte für Lenkeinschlag und Querbeschleunigung abzuleiten und vorzugeben, um vor dem Erreichen von Grenzsituationen bestimmte Funktionen freizuschalten oder zu unterdrücken.

Eine vorteilhafte Weiterbildung der Erfindung sieht vor, in der Einrichtung 36 einige der Grenzwerte mit geeigneten kleinen Hysteresen zu versehen, um Pendelschaltungen bei im praktischen Einsatz immer vorhandenen Schwingungen von Signalen um einen Arbeitspunkt zu vermeiden.

Des weiteren ist für jedes Schalt/Sperrelement 27, 28, 29 eine Einrichtung 2, 3, 4 zur Schlupfberechnung vorgesehen. Für ein selbsttätiges Sperrsystem ist die Schlupfermittlung der zentrale Punkt, um zu erkennen, wann ein Zustand eintritt, der ein automatisches Eingreifen erfordert. Das ist stets der Fall, wenn beispielsweise das geforderte Antriebsmoment an den angetriebenen Rädern nicht mehr abgesetzt werden kann. In diesem Fall kann es sinnvoll sein, weitere Achsen zuzuschalten, um das übertragbare Antriebsmoment zu erhöhen. Des weiteren haben Differentiale die Eigenschaft, dass in Summe nur zweimal das Minimum der beiden übertragbaren Ausgangsmomente übertragen wird. Kann also das vorhandene Antriebsmoment nicht übertragen werden, so kommt es zum Durchdrehen also Schlupfen von Antriebsrädern.

Andererseits gibt es Einflüsse, die Radgeschwindigkeitsverschiebungen zur Folge haben, ohne dass die Räder übermäßig durchdrehen.

Um aus den Radgeschwindigkeiten den tatsächlichen Schlupf richtig ermitteln zu können, müssen die systematischen Störeinflüsse eliminiert werden. Das wird in den Einrichtungen 2, 3, 4 zur Schlupfberechnung durchgeführt. Einflüsse kommen von der Lenkung, z.B. bei stationärer Kurvenfahrt, da die inneren Räder langsamer sind, als die äußeren. Bei Änderung des Lenkradwinkels ergeben sich, je nach Lenkrollradius an den Rädern Zusatzgeschwindigkeiten, die insbesondere bei Fahrzeugen mit Knicklenkung in Erscheinung treten. An jedem Reifen entsteht je nach Antriebsmoment im Verhältnis zur Normalkraft ein Reifenschlupf, der innerhalb gewisser Grenzen zugelassen werden muss.

Die Schlupfberechnung wird erfindungsgemäß für jedes Schalt/Sperrelement 27, 28, 29 durchgeführt. Für die Bildung der an den Schaltelementen auftretenden Schlupfgeschwindigkeit und die Beseitigung der systematischen Störeinflüsse ist im Rahmen einer vorteilhaften Weiterbildung der Erfindung vorgesehen, zusätzliche Sensorsignale zu verwenden, wie beispielsweise Lenkwinkel, Antriebsmoment, Radlastverteilung etc.

In den Einrichtungen 5, 6, 7 zum Vergleich der Ist-Schlupfgeschwindigkeit mit den Grenzwerten für die Schlupfgeschwindigkeit für jedes Schalt/Sperrelement werden aus den in den Einrichtungen 2, 3, 4 zur Schlupfberechnung vorher berechneten Schlupfgeschwindigkeiten 46 zulässige obere und untere Schlupfgeschwindigkeiten 40, 41 extrahiert, die für das Fahren in einem bestimmten Fahrzustand erforderlich sind.

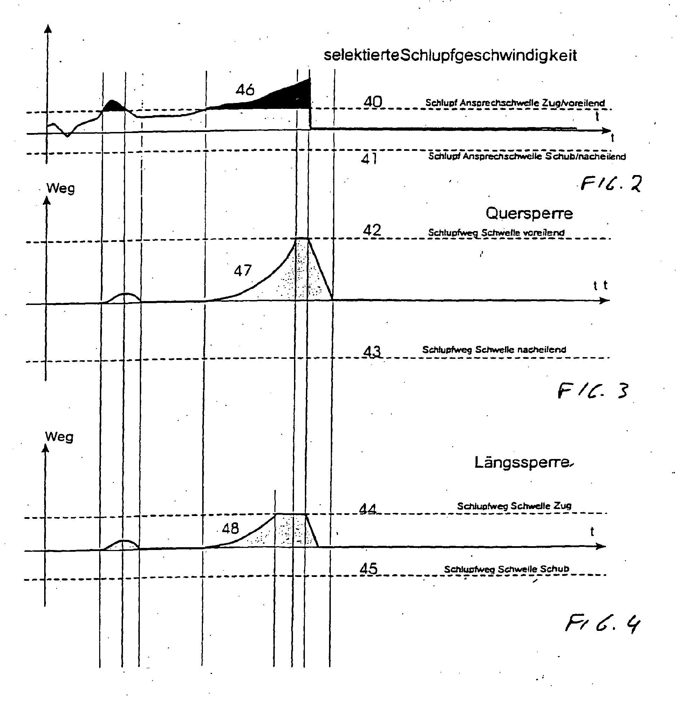

Dies wird in Figur 2 graphisch veranschaulicht: Die Kurve 46 ist die von den Einrichtungen 2, 3, 4 berechnete Schlupfgeschwindigkeit, wobei die Kurven 40, 41 ein Toleranzband um die Geschwindigkeit des Fahrzeuges über Grund definieren und Grenzwerte für Zugschlupf (voreilend) bzw. Schubschlupf (nacheilend) darstellen.

Die Vorgabe von Grenzwerten 40, 41 der Schlupfgeschwindigkeit kann erfindungsgemäß variabel gestaltet sein und von Fahrzustand, dynamischen Vorgängen, wie Getriebeschaltung, Lastwechsel, etc. abhängig gemacht werden. Je besser die Grenzwerte an die Erfordernisse des Fahrzustandes angepasst sind, um so genauer wird die Steuerung in den verschiedenen Fahrzeugzuständen und Fahrsituationen. Ursachen für unterschiedliche Vorgaben der Grenzwerte 40, 41 können beispielsweise ein Getriebeschaltstoß, Steilhangeinfahren, Zug/Schub-Unterscheidung, Unterdrückung von Resonanzen bei bestimmten Geschwindigkeiten, Gelände/Straße-Unterscheidung, Unterscheidung von Längsdifferential/Achszuschaltung etc. sein.

Das Verlassen des sogenannten Toleranzbandes 40, 41 kann in den zwei Richtungen Zugschlupf und Schubschlupf erfolgen. Die nachfolgenden Berechnungen werden getrennt für Zugschlupf und Schubschlupf durchgeführt, wobei in den Figuren die Situation für Zugschlupf dargestellt wird.

Wie Figur 1 zu entnehmen, umfasst die erfindungsgemäße Vorrichtung zumindest eine Einrichtung 8, 9, 10 zur Auswahl der entscheidenden Schlupfgeschwindigkeit, d.h. der Ist-Schlupfgeschwindigkeit, welche das Schalten einer Sperre auslösen kann. In Figur 1 sind diese Einrichtungen als Selektoren bezeichnet.

Aus dem in den Einrichtungen 5, 6, 7 durchgeführten Vergleich, bei dem ermittelt wird, ob der Schlupf über den Schlupfgrenzwerten liegt, führen zu einem Schaltwunsch/Sperrwunsch jene Zugschlupfgeschwindigkeiten die Werte >0 haben, und auch jene Schubschlupfgeschwindigkeiten, die Werte <0 haben. Damit kann schon eine Vorselektion getroffen werden, da in der Praxis der Schlupf an einer Komponente meist erstmals nur an einer Stelle auftritt und dann infolge der Kopplung der Systeme und der Grenzwerte schön langsam an allen Komponenten auftritt.

Aus der meist aus fahrdynamischen Untersuchungen vorgegebenen Reihenfolge wie Sperren/Achszuschaltungen etc. zum Einsatz kommen sollen, ergibt sich für jede Sperre ein bestimmtes Intervall bzw. ein bestimmter Geschwindigkeitsbereich von Schlupfgeschwindigkeiten 46, der für die Auslösung der Sperre relevant ist.

Daher wird erfindungsgemäß vorgeschlagen, aus den Zugschlupfgeschwindigkeiten jene auszuwählen, die den höchsten Wert aufweist, bzw. bei den negativen Schubschlupfgeschwindigkeiten jene auszuwählen, die den niedrigsten Wert aufweist, wobei aber auch weitere Auswahlkriterien möglich sind. Die ausgewählten Schlupfgeschwindigkeiten werden nun den Einrichtungen 11, 12, 13 zur Filterung von Elastizitäten und Unebenheiten zugeführt.

In diesen Einrichtungen 11, 12, 13 wird der nicht genau bestimmbare Störeinfluss von Elastizitäten im Antriebsstrang, im Reifen und von Unebenheiten der Fahrbahn nach einem vordefinierten maximalen Ausmaß herausgefiltert. Alles was darüber liegt, für zu einem Schaltwunsch oder dem weiteren eingeschaltet Halten bereits geschalteter Elemente. Die Filterung erfolgt gemäß der Erfindung durch Aufsummieren (bei zeitdiskreten Signalen) bzw. Integrieren den Schlupfgeschwindigkeiten bis zu einem vorgegebenen Grenzwert 42, 43, 44, 45, wobei der Grenzwert 42, 43, 44, 45 bevorzugterweise in Abhängigkeit von der Geschwindigkeit, dem Fahrzustand und weiteren Fahrzeugeigenschaften vorgegeben wird. Wird ein Grenzwert erreicht, so wird ein Schaltwunsch ausgelöst und die Summierung bzw. Integration angehalten. Die Grenzwerte stellen einen voreilenden bzw. nacheilenden Grenzschlupfweg dar. Diese Verläufe sind somit bei Quer- und Längssperre bis zur Begrenzung gleich, sofern nicht unterschiedliche Schlupfgeschwindigkeiten ausgewählt werden, wie Figur 2 (Verlauf für Quersperre) und Figur 3 (Verlauf für Längssperre) zu entnehmen ist. Mit 47 bzw. 48 sind die Schlupfwegkurven dargestellt, welche der Integration bzw. der Summierung der Schlupfgeschwindigkeiten bei Zug- bzw. Schubschlupf entsprechen.

Die Begrenzung 42, 43, 44, 45 ist erforderlich, da bei vorhandenem Sperrwunsch aber nicht erteilter Schalterlaubnis der Wert unendlich ansteigen würde, was bei Rechenwerkern zu Overflows führt. Zudem ergäben sich weitere Nachteile, wenn der Schlupf verschwinden würde, da der Schaltwunsch sehr lange noch aufrechterhalten und zu unerwünschten Effekten führen würde. Gemäß der Erfindung kann die Reihenfolge von Sperren-Ansteuerungen anhand vom Änderungen der Begrenzungen 42, 43, 44, 45 dynamisch verändert werden, was nach dem Stand der Technik nicht möglich ist.

Durch die Auswahl der entscheidenden Schlupfgeschwindigkeiten mittels der Einrichtungen 8, 9, 10 vor der Integration in den Einrichtungen 11, 12 13 werden die nachfolgenden Einrichtungen entkoppelt und können leicht ohne Auswirkung auf die anderen Einrichtungen entfallen, wenn z.B. eine Sperre nur manuell, nicht selbsttätig steuerbar ist oder nicht vorhanden ist, die Auswirkung des auftretenden Schlupfes aber auf andere Sperren Einfluss nehmen soll (z.B. bei Fahrzeugen ohne Vorderachsquersperren). Die Vorselektion durch die Einrichtungen 8, 9, 10 bewirkt; dass wesentlich weniger Vergleiche notwendig sind, wodurch das Steuerprogramm kleiner, schneller und transparenter gestaltet wird.

Gemäß Figur 1 sind Einrichtungen 14, 15, 16 zur Erzeugung des Ansteuerungssignales nach Berücksichtigung weiterer Faktoren für jedes Schalt/Sperrelement vorgesehen. Die Eingangssignale für diese Einrichtungen sind Schalt/Sperranforderungen, die aus der Schlupfsteuerung resultieren. Eine Aktivierung der Sperren ohne Berücksichtigung weiterer Parameter könnte zu einer Beschädigung von Komponenten des Antriebsstrangs führen.

So ist es beispielsweise sinnvoll, die Schaltung von Klauensperren nur dann zuzulassen, wenn zum Schaltzeitpunkt das noch gefahrlos und ohne Schädigung von Antriebsstrangkomponenten möglich ist. Jede Schaltfunktion wird erfindungsgemäß mit Fahrzeuggeschwindigkeitsgrenzen und/oder Lenkwinkel- oder Fahrzeugquerbeschleunigungsgrenzwerten versehen. Des weiteren können weitere Kriterien bei einer Bremsung mit Betriebsbremse, Motorbremse, Retarder sowie Anforderungen aus ABS-Systemen berücksichtigt werden, mit dem Ziel, das Fahrzeug in allen Situationen möglichst stabil zu-halten.

In diesen Einrichtungen 14, 15, 16 kann auch eine manuelle und abgesicherte Anforderung oder Verhinderung von Sperren eingegeben werden. Für einige Fahrzeuge ist z.B. die antriebsmomentabhängige Zuschaltung von Achsen bei kleinen Gängen erforderlich, um eine Überlastung von Antriebsachsen zu vermeiden. Durch die Gewichtsverlagerung bei Steigungsfahrten und über Differentiale gleich verteiltes Antriebsmoment kann es ebenfalls zu erhöhtem Schlupf kommen, sodass eine Steuerung, die den Einfluss quantifizieren kann, in diesem Fall vorausschauend Längssperren einlegen kann, wodurch die Sperren-Schalthäufigkeit reduziert wird. Zudem ist es bei manchen Fahrzeugen sinnvoll, im Stillstand und beim Anfahren einen definierten Sperrzustand herzustellen.

Als Ausgangssignal der Einrichtungen 14, 15, 16 wird ein Sperren-Ansteuerungssignal ausgegeben, welches dann unmittelbar die Betätigung des Schaltelementes veranlasst.

Gemäß einer bevorzugten Ausführungsform der vorliegenden Erfindung ist eine Einrichtung (Selektor) 20 zur Auswahl der relevantesten Sperre unter den auszulösenden Sperren, eine Einrichtung 21 zur Ansteuerung bzw. Begrenzung des Motordrehmomentes in Abhängigkeit von der Schlupfgeschwindigkeit für die relevanteste Sperre und eine Einrichtung 22 zur Begrenzung der Motordrehzahl vorgesehen.

Bei Klauensperren gibt es ein aus den mechanischen Eigenschaften definiertes "Schaltfenster" der zulässigen Differenzdrehzahl an den Sperrenteilen in positiver und negativer Drehrichtung. Bei Sperren mit einstellbarem Sperrmoment ist die thermische Belastung der Reibbeläge das Schaltkriterium. Des weiteren sollen nicht allzu starke Schläge durch das Schalten von Antriebsstrangteilen in den Antriebsstrang und so in das Fahrzeug eingeleitet werden. Daher ist es sinnvoll, ab einer bestimmten Höhe der Schlupfgeschwindigkeit die Schaltung von Antriebsstrangteilen durch Rücknahme des Antriebsmomentes zu unterstützen.

Wie bereits erläutert, wird ein schlupfbasierender Sperrwunsch bzw. Schaltwunsch an den Ausgängen der Einrichtungen 11, 12, 13 angezeigt. Der Sperrwunsch wird gemäß Figur 1 auch an die Einrichtung 20 geleitet, wo die relevanteste notwendige Sperre ausgewählt wird. Die Sperre, die für die Verbesserung des aktuellen Fahrzustandes am wichtigsten ist und größte Wirkung zeigt, soll zum Einschalten vorrangig unterstützt werden. Eine mögliche Vorgehensweise ist die Bildung des Absolutwertes der vorhandenen Schlupfgeschwindigkeiten und die Auswahl der Schlupfgeschwindigkeit, welche den größten Maximalwert aufweist. In vorteilhafter Weise werden Informationen über den aktuellen Sperrzustand auch der Einrichtung 20 zugeführt, so dass die bereits gesperrten Systeme/Schaltelemente für die Auswahl und die anschließende Momentenreduktion nicht in Betracht gezogen werden.

Die Einrichtung 20 ist mit einer Einrichtung 21 zur Ermittlung einer erforderlichen Drehmomentreduktion verbunden, um die in der Einrichtung 20 selektierte Sperre zu unterstützen. Hierbei wird eine Abtriebsdrehmoment-Rücknahmeanforderung generiert, wobei diese Anforderung in Abhängigkeit von der Schlupfgeschwindigkeit für die relevanteste Sperre berechnet wird. Die Sperre, die,für die Verbesserung des aktuellen Fahrzustandes die wichtigste ist und größte Wirkung zeigt, soll zum Einschalten vorrangig unterstützt werden, indem eine Anforderung erzeugt wird, das Motormoment zu reduzieren. Je mehr Sperren im Antriebstrang bereits geschaltet sind, desto höher ist das bereits übertragbare Drehmoment, bzw. umso schneller können nach dem Schalten der ausstehenden Sperre die Drehmomente ansteigen. Entsprechend kleiner (vorsichtiger) muss die Reduktionsanforderung dann ausfallen, um speziell im steilen Gelände unliebsame Einbrüche im Antriebsmoment und somit das Hängenbleiben oder auch das Motorabwürgen zu vermeiden. Bevorzugterweise setzt die Momentenrücknahme erst bei relativ hohen Überschreitungen der Schlupfschwellwerte ein.

Bei Sperrsystemen, die auf Klauen basieren, oder bei proportionalen Sperrsystemen, die derart betrieben werden, dass kein wesentlicher Schlupf im angeforderten Zustand auftritt ist es sinnvoll, die Reduktion des Abtriebsmomentes sofort wieder zurückzunehmen, wenn die gewünschte Sperre eingelegt ist, wenn nicht noch weitere Anforderungen anderer Schaltungen/Sperren vorliegen. Die in der Einrichtung 20 rückgeführten Ansteuersignale der Einrichtungen 14, 15, 16 ermöglichen die schnelle Beendigung der Drehmomentreduktion, nachdem erkannt wurde, dass die gewünschte Sperre nun zum Einlegen bereit ist.

Um Schwingungen im Antriebsstrang zu vermeiden, nachdem eine Sperre geschaltet wird (da das zu übertragende Drehmoment gemäß den Fahrerwünschen steigen wird), wird gemäß der Erfindung vorgeschlagen, den Drehmomentanstieg auf das vom Fahrer erwünschte Moment über eine kurze zeitliche Rampe auszugleichen. Dies erfolgt in einer Einrichtung 22 zur Begrenzung der Motordrehzahl und/oder des Motormomentes, welche auf Motordrehzahl und/oder Motormoment eingreift, um eine möglichst komfortable Fahrt zu gewährleisten.

Treten zudem Traktionsprobleme auf, so wird ein überschüssiges Antriebsmoment in die Beschleunigung jenes Rades oder Achse geleitet, die das zur Verfügung stehende Moment nicht auf den Boden übertragen kann. Somit steigen in Teilen des Antriebsstranges die Drehzahlen und somit auch die Motordrehzahl unerwünschterweise an. Dieser Motordrehzahlanstieg muss meist nachfolgend wieder rückgängig gemacht werden.

In diesem Fall ist es vorteilhaft, sofort nachdem eine Antriebsmomentenreduktion in der Einrichtung 21 angefordert wird, die vor dem Schlupfproblem herrschende Motordrehzahl anzufordern und auf diesem Wert zu begrenzen. Nach erfolgter Ansteuerung der gewünschten Sperre kann die Anforderung der Motordrehzahlbegrenzung wieder langsam angehoben werden.

Alternativ zur Motordrehzahlbegrenzung kann auch eine Motormomentbegrenzung durchgeführt werden.

Von der Einrichtung 22 werden nur Anforderungen an den Motor geleitet, die verträglich mit anderen Systemen des Fahrzeuges sind. So kann es sein, dass einer Getriebeschaltung oder einer Anforderung des ABS bei einer Bremsung eine höhere Priorität einzuräumen ist. Des weiteren ist ein Eingriff auf den Motor nur sinnvoll, wenn dieser ein positives Antriebsmoment abgibt.

In Figur 1 ist eine Anordnung für 4 x 4 Fahrzeuge gezeigt. Bei 8 x 8 Fahrzeugen gibt es bis zu sieben Sperr/Schaltfunktionen im Antriebsstrang, drei Längsdifferentiale mit Sperren und vier Querdifferentiale mit Sperren. Entsprechend der Anzahl der Sperren gibt es für jede Sperre/Schaltfunktion Einrichtungen, die die jeweilige Sperre bedienen, die im wesentlichen immer gleich sein können.

Die vorliegende Erfindung kann auch bei 12 x 12 Fahrzeugen angewandt bzw. eingesetzt werden; in vorteilhafter Weise lassen sich derartige Fahrzeuge auch als zwei Teilfahrzeuge darstellen, wobei ein übergeordneten Koordinator für die auf beide Fahrzeughälften wirksame zentrale Längssperre vorgesehen ist, welcher in einem der beiden Steuergeräte integriert ist.

Wenn eine angeforderte Sperre aktiviert wird, dann wird sie meist für eine definierte Wegstrecke oder zumindest für eine bestimmte Zeit eingeschaltet gehalten, um einem Fahrzeug die Möglichkeit zu geben, aus dem Bereich mit schlechter Traktion herauszukommen. Beim Lösen der Sperren kann erfindungsgemäß vorgesehen sein, dass Längssperren eingeschaltet sein müssen, solange Quersperren zwar nicht mehr angesteuert sind, jedoch noch nicht ausgeschaltet sind (für den Fall dass die Quersperren Klauensperren sind).

Bei proportional steuerbaren Sperren werden diese langsam geöffnet, um zu erkennen, ob der Schlupf wieder unzulässig ansteigt.

### Bezugszeichen

- 1: Einrichtung zur Signalerfassung
- 2: Einrichtung zur Schlupfberechnung
- 3: Einrichtung zur Schlupfberechnung
- 4: Einrichtung zur Schlupfberechnung
- 5: Einrichtung zum Vergleichen der Ist- Schlupfgeschwindigkeit mit den Grenzwerten für die Schlupfgeschwindigkeit
- 6: Einrichtung zum Vergleichen der Ist- Schlupfgeschwindigkeit mit den Grenzwerten für die Schlupfgeschwindigkeit
- 7: Einrichtung zum Vergleichen der Ist- Schlupfgeschwindigkeit mit den Grenzwerten für die Schlupfgeschwindigkeit
- 8: Einrichtung zur Auswahl der schaltungsauslösenden Schlupfgeschwindigkeiten
- 9: Einrichtung zur Auswahl der schaltungsauslösenden Schlupfgeschwindigkeiten.
- 10: Einrichtung zur Auswahl der schaltungsauslösenden Schlupfgeschwindigkeiten
- 11: Einrichtung zur Filterung von Elastizitäten und Unebenheiten
- 12: Einrichtung zur Filterung von Elastizitäten und Unebenheiten
- 13: Einrichtung zur Filterung von Elastizitäten und Unebenheiten
- 14: Einrichtung zur Erzeugung des Ansteuerungssignales nach Berücksichtigung weiterer Faktoren
- 15: Einrichtung zur Erzeugung des Ansteuerungssignales nach Berücksichtigung weiterer Faktoren
- 16: Einrichtung zur Erzeugung des Ansteuerungssignales nach Berücksichtigung weiterer Faktoren
- 17: Ventil
- 18: Ventil
- 19: Ventil
- 20: Einrichtung zur Auswahl der relevantesten Sperre
- 21: Einrichtung zur Ansteuerung des Drehmomentes
- 22: Einrichtung zur Begrenzung der Motordrehzahl
- 23: Aktuator
- 24: Aktuator
- 25: Aktuator
- 27: Hinterachsdifferential
- 28: Verteilergetriebe
- 29: Vorderachsdifferential
- 30: Getriebe
- 31: Motor
- 32: Sensor
- 33: Sensor
- 34: Sensor
- 35: Sensor
- 36: Einrichtung zur Ermittlung der Fahrzeuggeschwindigkeit
- 40: Zulässige obere Schlupfgeschwindigkeit
- 41: Zulässige untere Schlupfgeschwindigkeit
- 42: Grenzwert für Schlupfweg
- 43: Grenzwert für Schlupfweg
- 44: Grenzwert für Schlupfweg
- 45: Grenzwert für Schlupfweg
- 46: Schlupfgeschwindigkeit
- 47: Schlupfweg
- 48: Schlupfweg

## Patentansprüche

1. Verfahren zur selbsttätigen Steuerung von Schaltelementen zur Zuschaltung von Antriebsachsen und Sperren von Differentialen von Fahrzeugen, mit folgenden Schritten:
Erfassen von Eingangssignalen;
Ermitteln der Fahrzeuggeschwindigkeit aus den Radgeschwindigkeiten;
Ermitteln der Schlupfgrenzgeschwindigkeiten für die verschiedenen Schalt/Sperrelemente (17, 18, 19; 27, 28, 29);
Beseitigen der systematischen Störeinflüsse und Berechnen der Ist-Schlupfgeschwindigkeiten für jedes Schalt/Sperrelement (17, 18, 19; 27, 28, 29); Auswählen der Ist- Schlupfgeschwindigkeiten (46), die für die Auslösung eines Schalt/Sperrelements (17, 18, 19; 27, 28, 29) relevant sind;
Vergleichen der Ist-Schlupfgeschwindigkeiten mit den Schlupfgrenzgeschwindigkeiten für jedes Schalt/Sperrelement (17, 18, 19; 27, 28, 29)
Herausfiltern des Störeinflusses von Elastizitäten im Antriebsstrang, im Reifen und von Unebenheiten der Fahrbahn auf die Ist-Schlupfgeschwindigkeiten (46) und Erzeugen eines Schaltwunsches für eine Sperre, wenn ein Grenzwert erreicht wird; und
Erzeugen eines Ansteuerungssignales für zumindest ein Schalt/Sperrelement (17, 18, 19; 27, 28, 29) nach Berücksichtigung weiterer Faktoren für jedes Schalt/sperrelement, **dadurch gekennzeichnet, daß**
die Berechnungen getrennt für Zugschlupf und für Schubschlupf durchgeführt werden.

2. Verfahren nach Anspruch 1, **dadurch gekennzeichnet, dass** es folgende zusätzliche Schritte enthält:
Auswählen der relevantesten Sperre unter den auszulösenden Sperren und unterstützen der Schaltung dieser Sperre durch Generieren einer Abtriebsdrehmoment-Rücknahmeanforderung in Abhängigkeit von der Schlupfgeschwindigkeit; und
Freigeben der Motordrehzahl und/oder des Motormomentes nach der Schaltung einer Sperre.

3. Verfahren nach Anspruch 1 oder 2, **dadurch gekennzeichnet, dass** als Einganssignale Radgeschwindigkeiten, Lenkwinkel, Istwerte für Motorstaubremse, Retarder, Bremspedal, Getriebegang, Verteilergetriebegang, Getriebedrehzahlen, Status der Fahrkupplung bzw. Wandlerüberbrückungskupplung, aktuelles Motormoment, Motordrehzahl, sowie weitere Parameter verwendet werden, wobei Abweichungen, Offsets oder Korrektursignale für die jeweiligen Eingangssignale gebildet werden.

4. Verfahren nach einem der vorangehenden Ansprüche, **dadurch gekennzeichnet, dass** nach dem Ermitteln der Schlupfgrenzgeschwindigkeiten Grenzwerte für Lenkeinschlag und Querbeschleunigung abgeleitet und vorgegeben werden, um vor dem Erreichen von Grenzsituationen bestimmte Funktionen freizuschalten oder zu unterdrücken.

5. Verfahren nach Anspruch 4, **dadurch gekennzeichnet, dass** ein Teil der Grenzwerte mit geeigneten kleinen Hysteresen versehen wird, um Pendelschaltungen bei im praktischen Einsatz immer vorhandenen Schwingungen von Signalen um einen Arbeitspunkt zu vermeiden.

6. Verfahren nach einem der vorangehenden Ansprüche, **dadurch gekennzeichnet, dass** bei der Berechnung der Ist-Schlupfgeschwindigkeit und der Beseitigung der systematischen Störeinflüsse zusätzliche Sensorsignale, wie Lenkwinkel, Antriebsmoment, Radlastverteilung etc. verwendet werden.

7. Verfahren nach einem der vorangehenden Ansprüche, **dadurch gekennzeichnet, dass** beim Vergleichen der Ist-Schlupfgeschwindigkeit mit der Schlupfgrenzgeschwindigkeit für jedes Schalt/Sperrelement (27, 28, 29) zulässige obere und untere Schlupfgeschwindigkeiten (40, 41) extrahiert werden, welche ein Toleranzband um die Geschwindigkeit des Fahrzeuges über Grund definieren und Grenzwerte für Zugschlupf (voreilend) bzw. Schubschlupf (nacheilend) darstellen.

8. Verfahren nach Anspruch 7, **dadurch gekennzeichnet, dass** die Grenzwerte (40, 41) in Abhängigkeit von Fahrzustand, Getriebeschaltung und/oder Lastwechsel vorgegeben werden.

9. Verfahren nach einem der vorangehenden Ansprüche, **dadurch gekennzeichnet, dass** beim Auswählen der Schlupfgeschwindigkeiten, die für die Auslösung einer Sperre relevant sind, aus den Zugschlupfgeschwindigkeiten jene ausgewählt wird, die den höchsten Wert aufweist, und aus den Schubschlupfgeschwindigkeiten jene ausgewählt wird, die den niedrigsten Wert aufweist.

10. Verfahren nach einem der vorangehenden Ansprüche, **dadurch gekennzeichnet, dass** das Herausfiltern des Störeinflusses von Elastizitäten im Antriebsstrang, im Reifen und von Unebenheiten der Fahrbahn durch Aufsummieren oder Integrieren der Schlupfgeschwindigkeiten bis zu einem vorgegebenen Grenzwert (42, 43, 44, 45) erfolgt, wobei, wenn ein Grenzwert erreicht wird, ein Schaltwunsch ausgelöst und die Summierung bzw. Integration angehalten wird und wobei die Reihenfolge von Sperren-Ansteuerungen anhand vom Änderungen der Werte der Grenzwerte (42, 43, 44, 45) dynamisch veränderbar ist.

11. Verfahren nach Anspruch 10, **dadurch gekennzeichnet, dass** der Grenzwert (42, 43, 44, 45) in Abhängigkeit von der Geschwindigkeit, dem Fahrzustand und weiteren Fahrzeugeigenschaften vorgegeben wird

12. Verfahren nach einem der Ansprüche 2 bis 11,**dadurch gekennzeichnet, dass** eine Sperre, die für die Verbesserung des aktuellen Fahrzustandes am wichtigsten ist und größte Wirkung zeigt, mittels einer Reduzierung des Abtriebsdrehmomentes unterstützt wird.

13. Verfahren nach Anspruch 12, **dadurch gekennzeichnet, dass** die Auswahl der relevantesten Sperre, mittels Bildung des Absolutwertes der vorhandenen Schlupfgeschwindigkeiten und die Auswahl der Schlupfgeschwindigkeit, welche den größten Maximalwert aufweist, erfolgt, wobei Informationen über den aktuellen Sperrzustand berücksichtigt werden, so dass die bereits gesperrten Systeme/Schaltelemente für die Auswahl und die anschließende Momentenreduktion nicht in Betracht gezogen werden.

14. Verfahren nach Anspruch 13, **dadurch gekennzeichnet, dass** bei Sperrsystemen, die auf Klauen basieren oder bei proportionalen Sperrsystemen, die derart betrieben werden, dass kein wesentlicher Schlupf im angeforderten Zustand auftritt, die Reduktion des Abtriebsmomentes sofort zurückgenommen wird, wenn die gewünschte Sperre eingelegt ist, wenn nicht noch weitere Anforderungen anderer Schaltungen/Sperren vorliegen

15. Verfahren nach Anspruch 12, 13 oder 14, **dadurch gekennzeichnet, dass** nachdem eine Sperre geschaltet wird, der Drehmomentanstieg auf das vom Fahrer erwünschte Moment über eine kurze zeitliche Rampe ausgeglichen wird

16. Verfahren nach Anspruch 12, 13, 14 oder 15, **dadurch gekennzeichnet, dass** sofort, nachdem eine Antriebsmomentenreduktion angefordert wird, die vor dem Schlupfproblem herrschende Motordrehzahl angefordert und auf diesen Wert begrenzt wird.

17. Vorrichtung zur selbsttätigen Steuerung von Schaltelementen zur Zuschaltung von Antriebsachsen und Sperren von Differentialen von Fahrzeugen, insbesondere zur Durchführung des Verfahrens nach einem der Ansprüche 1 bis 16 die eine Einrichtung (1) zur Signalerfassung und zur Signalaufbereitung, eine Einrichtung (36) zur Ermittlung der Fahrzeuggeschwindigkeit aus den Radgeschwindigkeiten und zur Ermittlung der. Grenz- und schlupfgrenzgeschwindigkeiten sowie der Grenzwerte für Lenkeinschlag und Querbeschleunigung, eine Einrichtung (2, 3, 4) zur Schlupfberechnung für jedes Schalt/Sperrelement (27, 28, 29), eine Einrichtung (5, 6, 7) zum Vergleichen der Ist-Schlupfgeschwindigkeit mit den Grenz- und schlupfgrenzgeschwindigkeiten jedes Schalt/Sperrelement (27, 28, 29), Einrichtungen (8, 9, 10) zur Auswahl der schaltungsauslsenden Schlupfgeschwindigkeiten, eine Einrichtung (11, 12, 13) zur Filterung von Elastizitäten im Antriebsstrang und in den Reifen und von Unebenheiten und zur Erzeugung des Sperrwunsches für jedes Schalt/Sperrelement (27, 28, 29), und eine Einrichtung (14, 15, 16) zur Erzeugung des Ansteuerungssignales nach Berücksichtigung weiterer Faktoren für jedes Schalt/Sperrelement (27, 28, 29) umfasst, **dadurch gekennzeichnet, dass** die Vorrichtung dafür ausgebildet ist, die Berechnungen getrennt für Zugeschlupf und für Schubschlupf durchzuführen.

18. Vorrichtung nach Anspruch 17, **dadurch gekennzeichnet, dass** sie eine Einrichtung (20) zur Auswahl der relevantesten Sperre, eine Einrichtung (21) zur Ansteuerung des Drehmomentes in Abhängigkeit von der Schlupfgeschwindigkeit für die relevanteste Sperre, und eine Einrichtung (22) zur Begrenzung der Motordrehzahl nach erfolgter Sperre umfasst.

19. Vorrichtung nach Anspruch 17 oder 18, **dadurch gekennzeichnet, dass** die Einrichtung (1) Mittel zur selbsttätigen Bildung von Abweichungen oder Korrektursignalen für die jeweiligen Eingangssignale und/oder Mittel zum Ermitteln des Status der Sperren aus den Radgeschwindigkeiten aufweist.

## Claims

1. The invention relates to a method for the self-acting control of control elements for the activation of drive axles and the locks of differentials of vehicles by means of the following steps:
detection of input signals;
determination of the vehicle speed using the wheel speeds; determination of the slip limit speeds for the various control/locking elements (17, 18, 19, 27, 28, 29);
removal of the systematic disturbances and calculation of the actual slip speeds for each control/locking element (17, 18, 19, 27, 28, 29); selection of actual slip speeds (46) relevant for release of a control/locking element (17, 18, 19, 27, 28, 29);
comparison of the actual slip speeds with the slip limit speeds for each control/locking element (17, 18, 19, 27, 28, 29);
filtering of the disturbances from elasticities in the driveline, in the tire, and from road-surface irregularities affecting the actual slip speeds (46), and generation of a shift request for a lock when a limit value is reached;
generation of a control signal for at least one control/locking element (17, 18, 19, 27, 28, 29) after consideration of further factors for each control/locking element, **characterized in that** the calculations for traction slip and for thrust slip are performed separately.

2. A method according to claim 1, **characterized in that** the following additional steps are involved:
Selection of the most relevant lock among the locks to be released and support of the control of this lock through generation of an output torque reduction request depending on the slip speed, and release of the engine speed and/or engine torque after activation of a lock.

3. A method according to claim 1 or 2, **characterized in that** wheel speeds, steering angle, actual values for exhaust brake, retarder, brake pedal, transmission gear, transfer case gear, transmission speeds, status of the driving clutch or converter lockup clutch, current engine torque, engine speed and other parameters are used as input signals, with deviations, offsets or correction signals being created for the respective input signals.

4. A method according to one of the preceding claims, **characterized in that** after determination of the slip limit speeds, limit values are derived and specified for steer angle and transversal acceleration, so that specific functions are enabled or suppressed before a limit situation occurs.

5. A method according to claim 4, **characterized in that** some of the limit values are provided with suitable small hystereses to prevent gear-hunting when signals oscillate around a working point, which in practical application is always the case.

6. A method according to one of the preceding claims, **characterized in that** additional sensor signals, such as steer angle, drive torque, wheel-load distribution etc., are used for the calculation of the actual slip speed and the removal of the systematic disturbances.

7. A method according to one of the preceding claims, **characterized in that** permissible upper and lower slip speeds (40, 41) are extracted for each control/locking element (27, 28, 29) when the actual slip speed is compared with the slip limit speed, with these permissible speeds defining a tolerance band for the vehicle linear velocity and representing limit values for traction slip (leading) or thrust slip (trailing).

8. A method according to claim 7, **characterized in that** the limit values (40, 41) are set in relation to driving condition, shifting control, and/or load alteration.

9. A method according to one of the preceding claims, **characterized in that** during selection of the slip speeds which are relevant for the release of a lock, the slip speed with the highest value is selected from the traction slip speeds, while the slip speed with the lowest value is selected from the thrust slip speeds.

10. A method according to one of the preceding claims, **characterized in that** the filtering of disturbances from elasticities in the driveline and the tire, and from road surface irregularities, is performed through summation or integration of the slip speeds up to a preset limit value (42, 43, 44, 45), with a shifting request being triggered when a limit value is reached and the summation and/or integration being stopped, and with the sequence of locking/actuating being dynamically changeable on the basis of the changed limit values (42, 43, 44, 45).

11. A method according to claim 10, **characterized in that** the limit value (42, 43, 44, 45) is determined by the speed, the driving condition, and further vehicle characteristics.

12. A method according to one of the claims 2 through 11, **characterized in that** a lock which is most important for improvement of the current driving condition and produces the greatest effect is supported through reduction of the output torque.

13. A method according to claim 12, **characterized in that** selection of the most relevant lock is based on the creation of the absolute value of the existing slip speeds, and that the slip speed exhibiting the highest maximal value is chosen, with information about the current lock condition being considered, so that the systems/control elements already locked are not considered for the selection and the subsequent torque reduction.

14. A method according to claim 13, **characterized in that** if dog-based locking systems are involved, or proportional locking systems, which are operated in a manner that no significant slip occurs in the requested condition, reduction of the output torque is immediately canceled when the requested lock is engaged, unless there are further requests of other controls/locks.

15. A method according to claim 12, 13 or 14, **characterized in that** after engagement of a lock, the increase in torque will within a brief temporal ramp be equalized and reach the level requested by the driver.

16. A method according to claim 12, 13, 14 or 15, **characterized in that** immediately after request of a drive torque reduction, the engine speed present before the slip problem will be requested and set as limit.

17. A system for the self-acting control of control elements for the activation of drive axles and the locking of the differentials of vehicles, for implementation of the method according to one of the claims 1 through 16, with this system comprising a device (1) for signal acquisition and signal processing; a device (36) for determining the vehicle speed on the basis of the wheel speeds, and for determining limit and slip limit speeds as well as the limit values for steer angle and transversal acceleration; a device (2, 3, 4) for slip determination for each control/locking element (27, 28, 29); a device (5, 6, 7) for comparing the actual slip speed with the limit and slip limit speeds for each control/locking element (27, 28, 29); devices (8, 9, 10) for selection of the shift-triggering slip speeds; a device (11, 12, 13) for filtering elasticities in the driveline and tires, and from road-surface irregularities, as well as for the generation of the locking request for each control/locking element (27, 28, 29); and a device (14, 15, 16) for generation of the control signal after consideration of further factors for each control/locking element (27, 28, 29), **characterized in that** the system is designed for separate calculations of traction slip and thrust slip.

18. A system according to claim 17, **characterized in that** it comprises a device (20) for selection of the most relevant lock, a device (21) for control of the torque in relation to the slip speed for the most relevant lock, and a device (22) for limiting the engine speed after locking.

19. A system according to claim 17 or 18, **characterized in that** the device (1) features means for the self-acting creation of deviations or correction signals for the respective input signals and/or means for determining the status of the locks on the basis of the wheel speeds.

## Revendications

1. Procédé pour la commande automatique d'éléments de commande pour l'embrayage d'essieux moteurs et de blocages de différentiels de véhicules automobiles, comprenant les étapes suivantes :
capter des signaux d'entrée ;
déterminer la vitesse du véhicule à partir des vitesses des roues ;
déterminer les vitesses limites de patinage pour les différents éléments d"embrayage/blocage (17, 18, 19 ; 27, 28, 29) ;
éliminer les influences perturbatrices systématiques et calculer la vitesse de patinage réelle pour chaque élément de commande/blocage (17, 18, 19 ; 27, 28, 29) ;
sélectionner les vitesses de patinage réelles (46) qui sont pertinentes pour le désenclenchement d'un élément de commande/blocage (17, 18, 19 ; 27, 28, 29);
comparer les vitesses de patinage réelles aux vitesses de limite de patinage pour chaque élément de commande/blocage (17, 18, 19 ; 27, 28, 29) ;
filtrer les influences perturbatrices des élasticités de la chaîne cinématique, dans les pneumatiques, et les irrégularités de la chaussée sur les vitesses de patinage (46) et produire un souhait de commande pour un blocage lorsqu'une valeur limite est atteinte ; et
produire un signal de pilotage pour au moins un élément de commande/blocage (17, 18, 19 ; 27, 28, 29) après la prise en compte d'autres facteurs pour chaque élément de commande/blocage, **caractérisé en ce que**
les calculs sont exécutés séparément pour le patinage en traction et pour le patinage en poussée.

2. Procédé selon la revendication 1, **caractérisé en ce qu**'il comprend les étapes supplémentaires suivantes :
sélectionner le blocage le plus pertinent parmi les blocages à désenclencher et assister l'enclenchement de ce blocage par une génération d'une exigence de reprise du couple de sortie en fonction de la vitesse de patinage ; et
libérer la vitesse de rotation du moteur et/ou le couple du moteur après l'enclenchement d'un blocage.

3. Procédé selon la revendication 1 ou 2, **caractérisé en ce qu**'on utilise, comme signaux d'entrée, des vitesses de roue, angles de braquage, valeurs réelles pour le freinage de calage du moteur, ralentisseur, pédale de frein, vitesse enclenchée dans la boîte, vitesse enclenchée dans la boîte de transfert, vitesses de rotation des boîtes, situation de l'embrayage de marche ou de l'embrayage de blocage du convertisseur, couple actuel du moteur, vitesse de rotation du moteur ainsi que d'autres paramètres, les écarts, décalages ou signaux de correction étant formés pour les signaux d'entrée respectifs.

4. Procédé selon l'une des revendications précédentes, **caractérisé en ce que,** après la détermination des vitesses limites de patinage, on déduit des vitesses limites pour le braquage et pour l'accélération transversale et on les prescrit pour libérer ou supprimer des fonctions déterminées avant que des situations limites ne soient atteintes.

5. Procédé selon la revendication 4, **caractérisé en ce qu**'une partie des valeurs limites est pourvue de petites hystérésis appropriées pour éviter des oscillations de la commande dans le cas d'oscillations de signaux de part et d'autre d'un point de travail qui sont toujours présentes dans les applications pratiques.

6. Procédé selon l'une des revendications précédentes, **caractérisé en ce que,** dans le calcul de la vitesse de patinage réelle et l'élimination des influences parasites systématiques, on utilise des signaux de capteurs additionnels comme l'angle de braquage, le couple d'entraînement, la distribution de la charge sur les roues, etc..

7. Procédé selon l'une des revendications précédentes, **caractérisé en ce que,** dans la comparaison de la vitesse de patinage réelle avec la vitesse limite de patinage pour chaque élément de commande/blocage (27, 28, 29), on extrait des vitesses de patinage admissibles supérieure et inférieure (40, 41) qui définissent une bande de tolérance de part et d'autre de la vitesse du véhicule par rapport au sol, et représentent des valeurs limites pour le patinage en traction (en avance) et le patinage en poussée (en retard).

8. Procédé selon la revendication 7, **caractérisé en ce que** les valeurs limites (40, 41) sont prédéterminées en fonction de l'état de conduite, de l'enclenchement dans la boîte de vitesses et/ou de l'inversion de charge.

9. Procédé selon l'une des revendications précédentes, **caractérisé en ce que,** lors de la sélection des vitesses de patinage qui sont pertinentes pour le désenclenchement du blocage, on sélectionne parmi les vitesses de patinage en traction celle qui présente la plus haute valeur et, parmi les vitesses de patinage en poussée, on sélectionne celle qui présente la plus faible valeur.

10. Procédé selon l'une des revendications précédentes, **caractérisé en ce que** le filtrage de l'influence perturbatrice des élasticités existant dans la chaîne cinématique, dans le pneumatique et celle des inégalités de la chaussée, s'effectue par addition ou intégration des vitesses de patinage jusqu'à ce qu'on atteigne une valeur limite prédéterminée (42, 43, 44, 45), tandis que, lorsqu'une valeur limite est atteinte, un souhait de changement est déclenché et l'addition ou l'intégration est interrompue, et que l'ordre de succession des actionnements de blocage peut subir des variations dynamiques sur la base des variations des valeurs des limites (42, 43, 44, 45).

11. Procédé selon la revendication 10, **caractérisé en ce que** la limite (42, 43, 44, 45) est prédéterminée en fonction de la vitesse, de l'état de conduite et d'autres propriétés du véhicule.

12. Procédé selon l'une des revendications 2 à 11, **caractérisé en ce qu**'un blocage qui est le plus important et qui possède le plus grand effet pour l'amélioration de l'état actuel de la conduite est assisté au moyen d'une réduction du couple de sortie.

13. Procédé selon la revendication 12, **caractérisé en ce que** la sélection du blocage le plus pertinent s'effectue au moyen de la formation de la valeur absolue des vitesses de patinage existantes et par la sélection de la vitesse de patinage qui présente la plus grande valeur maximale, des informations sur l'état de blocage actuel étant alors prises en compte, de sorte que les systèmes/éléments de commande déjà bloqués ne sont pas pris en considération pour la sélection ni pour la réduction ultérieure du couple.

14. Procédé selon la revendication 13, **caractérisé en ce que,** dans le cas de systèmes de blocage qui sont à base de crabots, ou dans le cas de systèmes de blocage proportionnels que l'on fait travailler de telle manière qu'il n'y ait pas de patinage notable dans l'état exigé, la réduction du couple de sortie est aussitôt remise à zéro lorsque le blocage souhaité est enclenché alors qu'il n'y a pas de nouvelles exigences d'autres enclenchements/blocages.

15. Procédé selon la revendication 12, 13 ou 14, **caractérisé en ce que** lorsqu'un blocage a été enclenché, l'élévation du couple jusqu'au couple souhaité par le conducteur est équilibrée sur une courte rampe temporelle.

16. Procédé selon la revendication 12, 13, 14 ou 15, **caractérisé en ce que**, après une réduction du couple d'entraînement ait été demandée, la vitesse de rotation du moteur existant avant le problème de patinage est aussitôt demandée et limitée à cette valeur.

17. Dispositif pour la commande automatique d'éléments de commande pour l'enclenchement d'essieu moteur et le blocage de différentiel de véhicule, pour la mise en oeuvre du procédé selon l'une des revendications 1 à 16, qui comprend un dispositif (1) pour la détection de signaux et la préparation de signaux, un dispositif (36) pour la détermination de la vitesse du véhicule à partir des vitesses des roues et pour la détermination des vitesses limites et limites de patinage, ainsi que des limites pour le braquage de la direction et l'accélération transversale, un dispositif (2, 3, 4) pour le calcul du patinage pour chaque élément de commande/blocage (27, 28, 29), un dispositif (5, 6, 7) pour la comparaison de la vitesse de patinage réelle avec les vitesses limites et limites de patinage pour chaque élément de commande/blocage (27, 28, 29), des dispositifs (8, 9, 10) pour la sélection des vitesses de patinage déclenchant la commutation, un dispositif (11, 12, 13) pour le filtrage des élasticités existantes dans la chaîne cinématique et dans les pneumatiques, et d'irrégularités, et pour la production du souhait de blocage pour chaque élément de commande/blocage (27, 28, 29) et un dispositif (14, 15, 16) pour la production du signal d'actionnement après la prise en compte d'autres facteurs pour chaque élément de commande/blocage (27, 28, 29), **caractérisé en ce que** le dispositif est conçu pour exécuter séparément les calculs pour le patinage en traction et pour le patinage en poussée.

18. Dispositif selon la revendication 17, **caractérisé en ce qu'**il comprend un dispositif (20) pour la sélection du blocage le plus pertinent, un dispositif (21) pour la commande du couple en fonction de la vitesse de patinage pour le blocage le plus pertinent et un dispositif (22) pour la limitation de la vitesse de rotation du moteur après l'exécution du blocage.

19. Dispositif selon la revendication 17 ou 18, **caractérisé en ce que** le dispositif (1) comporte des moyens pour la formation automatique d'écarts ou de signaux de correction pour les signaux d'entrée respectifs et/ou des moyens pour la détermination du statut des blocages en se basant sur les vitesses des roues.
